# EUROPEAN PATENT SPECIFICATION

(11) **EP 3 851 994 B1**
(45) Date of publication and mention of the grant of the patent: **28.09.2022**
(21) Application number: 20215490.2
(22) Date of filing: 18.12.2020
(51) Int. Cl.: G06F 21/64

(54) **VERIFICATION METHOD, VERIFICATION APPARATUS, AND VERIFICATION PROGRAM**
VERIFIZIERUNGSVERFAHREN, VERIFIZIERUNGSVORRICHTUNG UND VERIFIZIERUNGSPROGRAMM
PROCÉDÉ DE VÉRIFICATION, APPAREIL DE VÉRIFICATION ET PROGRAMME DE VÉRIFICATION

(30) Priority: 16.01.2020 JP 2020005200
(43) Date of publication of application: 21.07.2021
(73) Proprietor: FUJITSU LIMITED, Kanagawa 211-8588 (JP)
(72) Inventor: Takeuchi, Takuma, Kanagawa, 211-8588 (JP); Yuki, Yonekura, Kanagawa, 211-8588 (JP); Fujimoto, Shingo, Kanagawa, 211-8588 (JP); Morinaga, Masanobu, Kanagawa, 211-8588 (JP)
(74) Representative: Hoffmann Eitle

(56) References cited:
- EP-A1- 3 851 994
- WO-A1-2019/015904
- US-A1- 2019 278 944
- US-A1- 2019 354 397

## Description

### FIELD

An embodiment discussed herein is related to a verification method, a verification apparatus, and a verification program.

### BACKGROUND

In principle, a blockchain maintains a reliability based on verification by many nodes for each transaction when an absence of a central authority. Public blockchains represented by Bitcoin and Ethereum enable a decentralized operation of participating players, but each transaction is associated with a virtual currency to secure an incentive for participating in a blockchain network in terms of money. US 2019/278944 A1 discloses a method and system for securely storing transactions in a consortium blockchain wherein a verification system requests a plurality of verification nodes to verify data. US2019/354397 A1 discloses a method and system for security storing transactions in a blockchain wherein a plurality of endorsing peers are requested to endorse the transactions and that the endorsing peers assign a priority to the transaction. WO 2019/015904 A1 discloses a method and system for storing transactions in a blockchain wherein verification of a transaction involves a sequence of nodes.

### SUMMARY

### [TECHNICAL PROBLEM]

However, in a case of a consortium blockchain, since some programs do not have the virtual currency itself as a default, it is not possible to secure an incentive to participate as a node. As described above, since the reliability of the blockchain is based on the verification by many nodes, ensuring the participation of many nodes is very important for ensuring the reliability of the blockchain.

Therefore, in one aspect, an object is to increase willingness to participate in the blockchain network.

### [SOLUTION TO PROBLEM]

According to an aspect of the embodiments, provided is a verification method implemented by a computer operable as any of a plurality of nodes included in a blockchain network. In an example, the verification method includes: obtaining a verification policy with respect to a blockchain, the verification policy including a plurality of logics, each logic being configured to receive a respective input value and output a respective output value, at least any one of the plurality of logics being configured to receive an output value outputted from another logic; obtaining, for each logic included in the obtained verification policy, an input value and an output value from verification record data of a transaction data stored in the blockchain; transmitting a first verification request to a first node included in the blockchain network, the first verification request including a first logic from among the plurality of logics and the obtained input and output values with respect to the first logic, the transmitting of the first verification request being configured to cause the first node to verify the first logic in accordance with the obtained input and output values with respect to the first logic; and transmitting a second verification request to a second node included in the blockchain network, the second verification request including a second logic from among the plurality of logics and the obtained input and output values with respect to the second logic, the transmitting of the second verification request being configured to cause the second node to verify the second logic in accordance with the obtained input and output values with respect to the second logic, the second node being any of the plurality of nodes other than the first node, the second logic being any of the plurality of logics other than the first logic.

### [ADVANTAGEOUS EFFECTS OF INVENTION]

According to an aspect, it is possible to increase willingness to participate in the blockchain network.

### BRIEF DESCRIPTION OF DRAWINGS

FIG. 1 illustrates a configuration example of a transaction management system 1 according to an embodiment of the present invention;
FIG. 2 illustrates a hardware configuration example of each peer 10 in the embodiment of the present invention;
FIG. 3 illustrates a functional configuration example of each peer 10 in the embodiment of the present invention;
FIG. 4 is a sequence diagram for explaining an example of a processing procedure executed when a unique policy is registered;
FIG. 5 illustrates an example of conversion of the unique policy into a policy graph;
FIG. 6 illustrates an example of concealed structure data;
FIGs. 7A and 7B illustrate a sequence diagram for explaining an example of a processing procedure executed when a transaction which is a verification target of a unique policy occurs;
FIG. 8 is a sequence diagram for explaining an example of a processing procedure of unique policy verification processing; and
FIG. 9 illustrates an example of dividing the concealed structure data into subgraphs.

### DESCRIPTION OF EMBODIMENT(S)

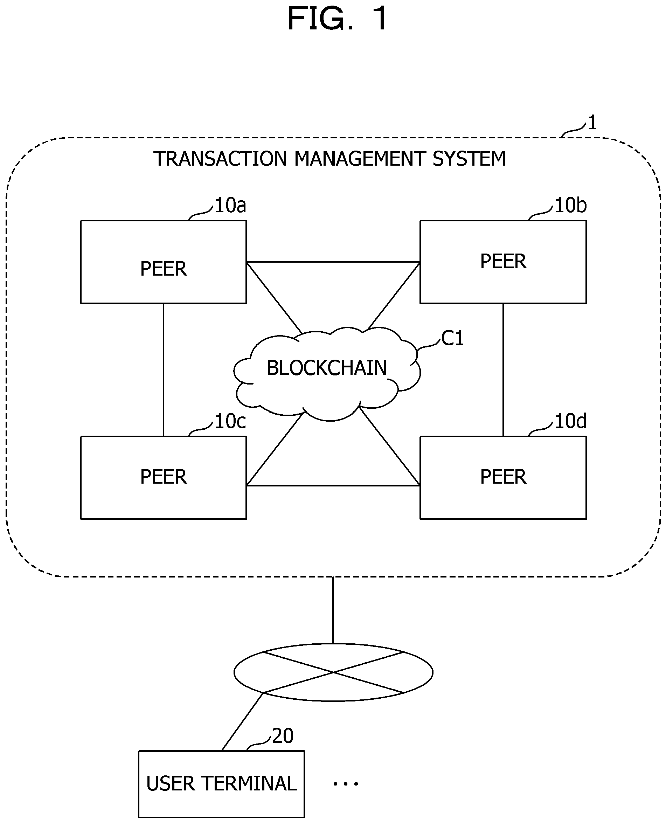

An embodiment of the present invention will be described below with reference to the drawings. FIG. 1 illustrates a configuration example of a transaction management system 1 according to the embodiment of the present invention. In FIG. 1, a plurality of user terminals 20 are coupled to the transaction management system 1 via a network such as the Internet.

The user terminal 20 is a terminal used by parties involved in various transactions. For example, a personal computer (PC), a smartphone, a tablet terminal, or the like may be used as the user terminal 20.

The transaction management system 1 is a P2P network (blockchain network) that manages transactions performed between user terminals 20, and includes a set of nodes that are a plurality of computers or information processing devices to which a distributed ledger technology is applied. In the present embodiment, each node is referred to as a peer 10 for convenience. Each peer 10 includes a storage unit (hereinafter referred to as "ledger") that is coupled by a blockchain network and that manages common ledger information in a distributed manner. A blockchain indicating a history of transactions is recorded in the ledger. In FIG. 1, a blockchain C1 indicates a blockchain common to the peers 10, which is stored in the ledger of each peer 10. In FIG. 1, an example in which four peers 10 are included in the transaction management system 1 is illustrated for the convenience, but the number of peers 10 is not limited to four.

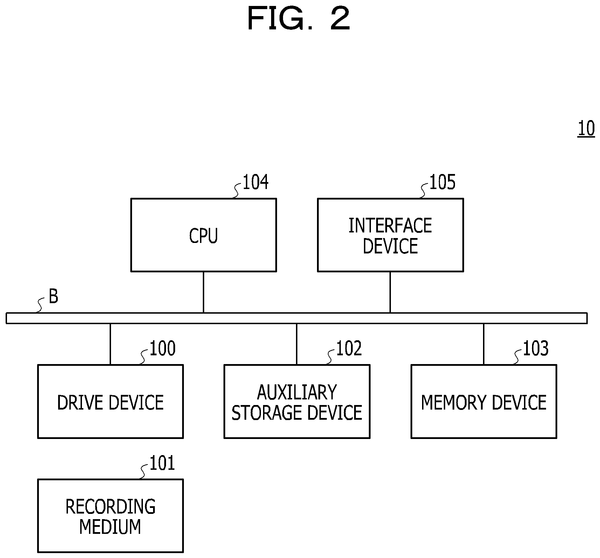

FIG. 2 illustrates a hardware configuration example of each peer 10 in the embodiment of the present invention. As illustrated in FIG. 2, the peer 10 includes a drive device 100, an auxiliary storage device 102, a memory device 103, a central processing unit (CPU) 104, an interface device 105, and the like, which are coupled to each other by a bus B.

The program that realizes the processing in peer 10 is provided by a recording medium 101. When the recording medium 101 that records the program is set in the drive device 100, the program is installed to the auxiliary storage device 102 from the recording medium 101 via the drive device 100. However, it is not preferably desirable to install the program from the recording medium 101, and may be downloaded from another computer via a network. The auxiliary storage device 102 stores the installed program and the usable files and data.

When an instruction to start the program is issued, the memory device 103 reads and stores the program from the auxiliary storage device 102. The CPU 104 executes functions relating to the peer 10 according to the program stored in the memory device 103. The interface device 105 is used as an interface for coupling the devices to the network.

Examples of the recording medium 101 include portable recording media, such as a compact disc read-only memory (CD-ROM), a digital versatile disc (DVD), and a Universal Serial Bus (USB) memory. Examples of the auxiliary storage device 102 include a hard disk drive (HDD) or a flash memory. Any one of the recording medium 101 and the auxiliary storage device 102 corresponds to a computer-readable recording medium.

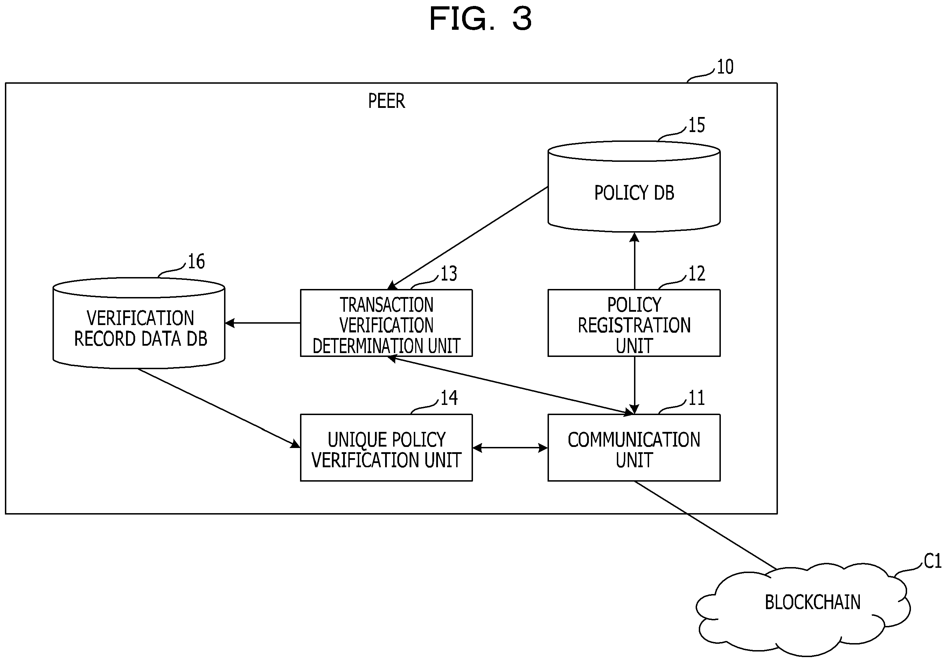

FIG. 3 illustrates a functional configuration example of each the peer 10 in the embodiment of the present invention. In FIG. 3, the peer 10 includes a communication unit 11, a policy registration unit 12, a transaction verification determination unit 13, a unique policy verification unit 14, and the like. Each of these units is realized by the processing that one or more programs installed in the peer 10 cause the CPU 104 to execute. In addition, the peer 10 also uses a database (storage unit) such as a policy DB 15 and a verification record data DB 16. Each of these storage units may be realized by using, for example, the auxiliary storage device 102 or a storage device that may be coupled to the peer 10 via a network.

The communication unit 11 performs communication with the user terminal 20 or other peer 10. In addition, the communication unit 11 of a certain peer 10 records transaction data in the blockchain C1. The policy registration unit 12 receives an input of a transaction verification policy that is a policy unique to each peer 10 (hereinafter referred to as a "unique policy"), and registers the input unique policy in the policy DB 15. That is, in the present embodiment, a unique policy may be set for each peer 10 as a transaction verification policy separately from a common policy for all the peers 10 (hereinafter referred to as a "common policy").

The transaction verification determination unit 13 performs the verification of the transaction based on the common policy and the unique policy of the peer 10 in response to a request for verification of the transaction. As described later, the unique policy may be expressed as a set of one or more functions, and if an input value is input to the unique policy, an output value based on the function included in the unique policy is output. Noted that each function may be referred to as "logic", "code", "method", and "script" expressed in a programming language. The transaction verification determination unit 13 stores (records) data in which the input value input to each function that configures the unique policy and the output value from the function at the time of verification and identification information on the verification target transaction (hereinafter referred to as a "transaction ID") are associated with each other, in the verification record data DB 16 as verification record data. The transaction verification determination unit 13 also records a hash value of each of the input value to each function of the unique policy and the output value from each function in the blockchain C1 (ledger).

The unique policy verification unit 14 performs the processing relating to the verification of the unique policy of each peer 10. The verification of the unique policy is to check whether or not the unique policy of each peer 10 is not changed without permission with respect to other policies.

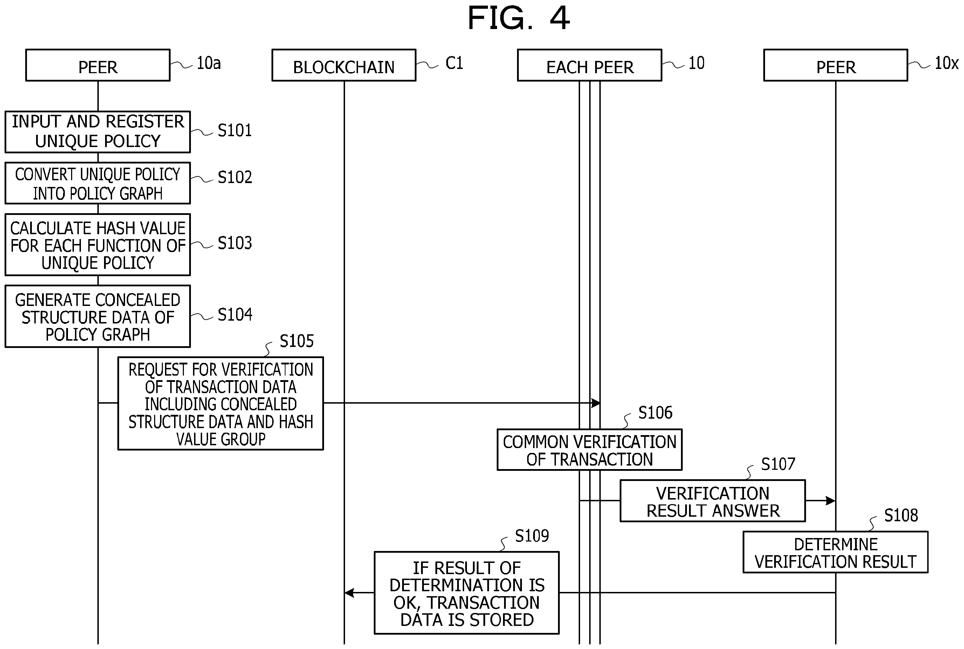

Hereinafter, the processing procedure executed in the transaction management system 1 will be described. FIG. 4 is a sequence diagram for explaining an example of a processing procedure executed when the unique policy is registered. In FIG. 4, an example in which a unique policy is registered in the peer 10a is illustrated. When the unique policy is registered in another peer 10, the processing procedure in which another peer 10 and the peer 10a are replaced in FIG. 4 may be executed.

In step S101, the policy registration unit 12a receives an input of a unique policy of the peer 10a (hereinafter, referred to as "target unique policy") from, for example, an administrator of the peer 10a, and registers the target unique policy in the policy DB 15a. Subsequently, the policy registration unit 12a converts the target unique policy into graph data (hereinafter, referred to as a "policy graph") having a tree structure including components corresponding to the functions and the input values or output values to or from the functions (S102). That is a policy graph for the target unique policy is generated.

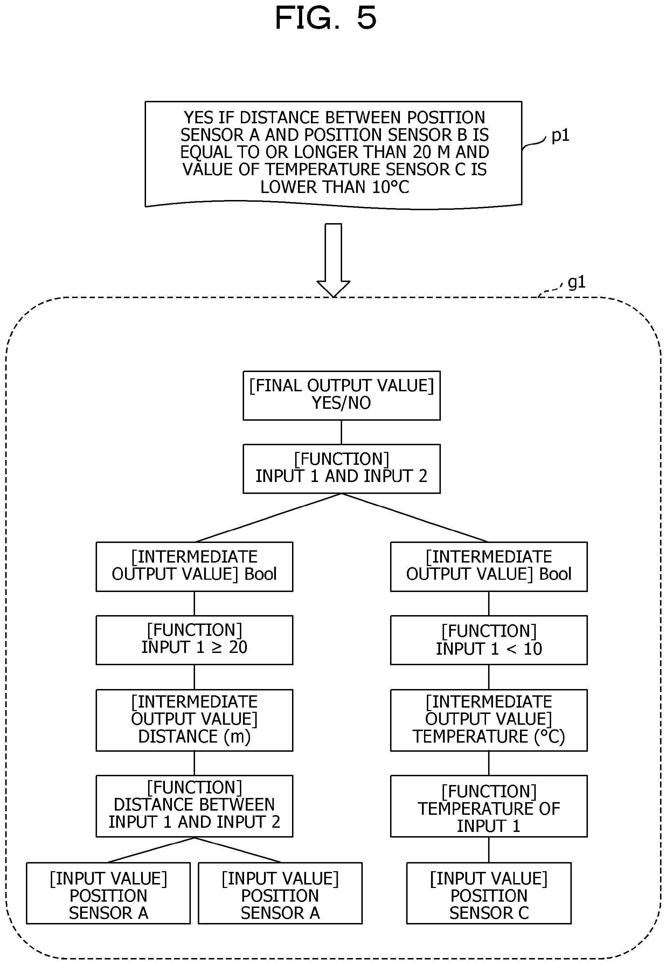

FIG. 5 illustrates an example of conversion of the unique policy into the policy graph. FIG. 5 illustrates an example in which a content of a unique policy p1 is "YES if a distance between a position sensor A and a position sensor B is equal to or longer than 20 m and a value of a temperature sensor C is lower than 10°C". In this case, the policy graph g1 expressing the unique policy p1 is, for example, as illustrated in FIG. 5. In the policy graph g1, the node corresponding to the function includes information indicating the content of the function and identification information of the function (hereinafter referred to as "function ID"). A child node of the function corresponds to an input value to the function, and includes information (hereinafter, referred to as "input value information") indicating what the value corresponding to the input value is. In some cases, the input value to the function may be the output value from the function of a lower node, and such an input value is represented as an "intermediate output value" in FIG. 5. A parent node of the function corresponds to the output value from the function and includes information (hereinafter, referred to as an "output value information") indicating what the value corresponding to the output value is. The output value from the highest function corresponds to the output value of the entire unique policy, and such an output value is described as a "final output value" in FIG. 5. The final output value is YES or NO. YES indicates that the verification was successful (the transaction complies with the unique policy), and NO indicates that verification failed (the transaction does not comply with the unique policy). In the policy graph g1, the identification information is given to each node. Hereinafter, the identification information of each node is referred to as a "node ID".

Hereinafter, it is assumed that the unique policy p1 is a target unique policy. The policy graph g1 may be registered in the policy DB 15 in association with the unique policy p1.

Subsequently, the policy registration unit 12a calculates a hash value of the function (hereinafter, referred to as a "function hash value") for each function included in the policy graph g1 (S103). The function hash value may be calculated, for example, by encrypting each function with a public key that is associated with a private key held by the peer 10a. For example, the function hash value may be calculated by encrypting each function with a common key held by the peer 10a and another peer 10.

Subsequently, the policy registration unit 12a generates a structure data of a graph (hereinafter, referred to as "concealed structure data") in which the specific contents (the input value information, the intermediate output value information, the function, and the like) of each peer 10 in the policy graph g1 are hidden or concealed (for example, the contents are missing) (S104).

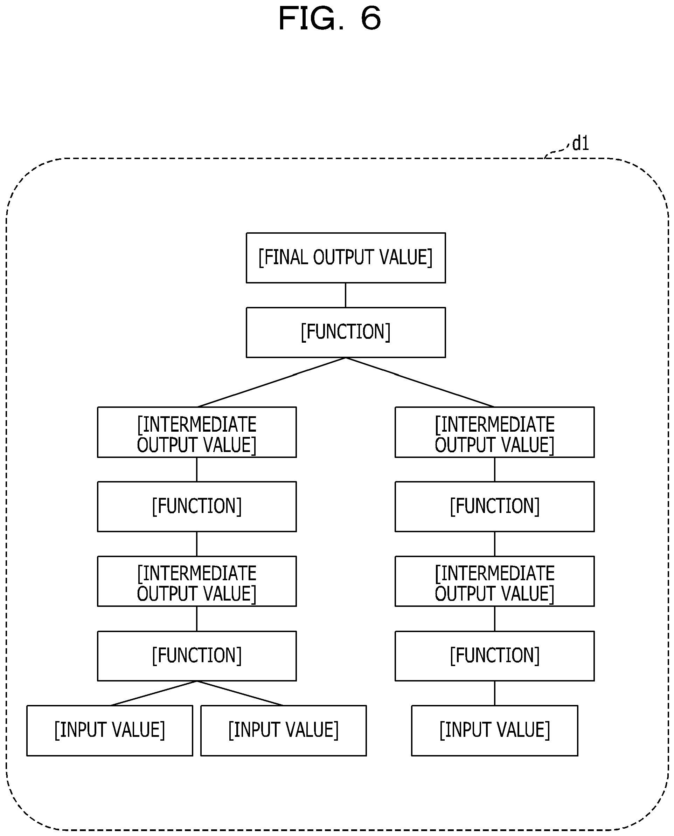

FIG. 6 illustrates an example of the concealed structure data. In FIG. 6, concealed structure data d1 is concealed structure data corresponding to the policy graph g1.

As illustrated in FIG. 6, the concealed structure data d1 is data indicating a type of content of each node of the policy graph g1 (hereinafter referred to as "node type"). As a result, the specific information included in each peer 10 in the policy graph g1 is missing (hidden). Here, the node type is an "input value", a "function", an "intermediate output value", and a "final output value". Therefore, it may be said that the concealed structure data d1 is data indicating the relationship between the "input value", the "function", the "intermediate output value", and the "final output value". In addition, each node in the concealed structure data d1 includes the same node ID as the corresponding node in the policy graph g1. Therefore, it may be said that the concealed structure data d1 is data that includes the node ID and the node for each node and that includes the information indicating the coupling relationship between the nodes. The node ID may include the node type.

Subsequently, the policy registration unit 12a transmits a request for verification of the transaction data (hereinafter, referred to as "target transaction data") including the concealed structure data d1 and the function hash value group (a set of function hash values calculated in step S103) to each peer 10 of the transaction management system 1 (S105). In the target transaction data, information is included, which enables to determine each function hash value corresponds to which of the nodes included in the concealed structure data d1. For example, each function hash value may be included in the target transaction data in association with the node ID. The peer 10a may be included in each peer 10. The same applies to other sequence diagrams.

When the communication unit 11 of each peer 10 receives the request for verification, the transaction verification determination unit 13 of each peer 10 executes the verification based on the common policy (hereinafter, referred to as "common verification") for the target transaction data included in the request for verification (S106). For example, the common policy for transaction data including the concealed structure data d1 and the function hash value group may confirm that the concealed structure data d1 conforms to a predetermined structure and the function hash value group is included in association with node ID.

Subsequently, the communication unit 11 of each peer 10 transmits an answer including the verification result of common verification to the peer 10x (S107). The peer 10x may be any one peer 10 (for example, the peer 10 having the best result of processing for a certain calculation processing) among the peers 10 to which the steps S106 and S107 are executed, or may be one predetermined peer 10. The one predetermined peer 10 may be a special peer 10 (peers responsible for writing to the blockchain C1) different from each of the peers 10. In this case, the target transaction data may be transmitted to the peer 10x together with the verification result. Which will be the peer 10x is the same in the subsequent sequence diagrams. The verification result is information indicating whether the target transaction data conforms to the common policy and the target transaction data is approved (OK), or the target transaction data does not conform to the common policy and the target transaction data is not approved (NG).

When the communication unit 11x of the peer 10x receives the corresponding answer from each peer 10, the transaction verification determination unit 13x of the peer 10x determines the verification result of the target transaction data based on the answer from each peer 10 (S108). For example, the target transaction data may be determined to be OK when all the verification results by each peer 10 are OK, or the determination whether the target transaction data is OK or NG may be performed based on other methods (for example, majority vote). If the result of determination is OK, the communication unit 11x stores the target transaction data (That is the concealed structure data d1 and the function hash value group) in the blockchain C1 (S109). That is, the target transaction data is registered in the ledger x, and the result of registration in the ledger x is also reflected in the ledger of each of other peers 10.

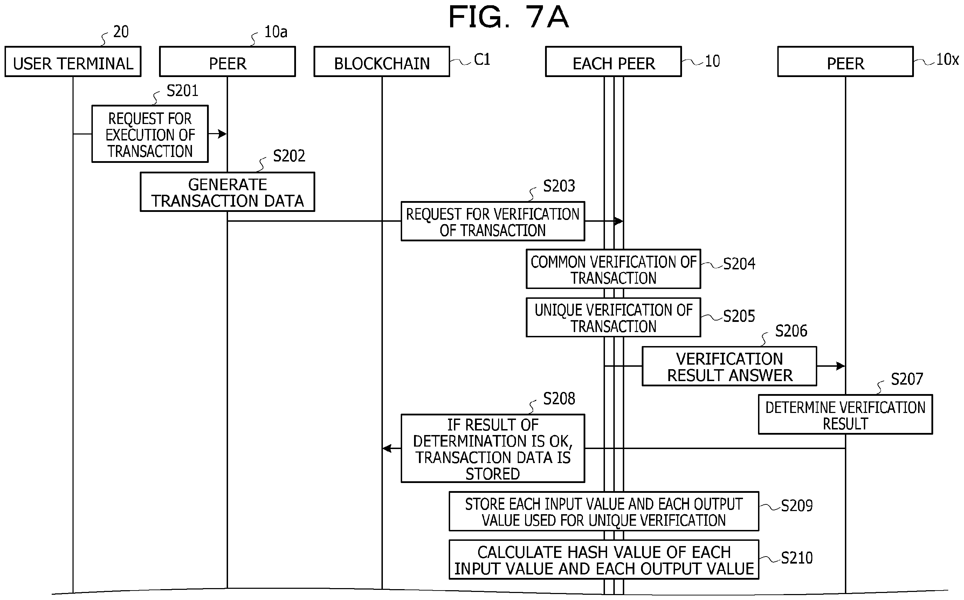

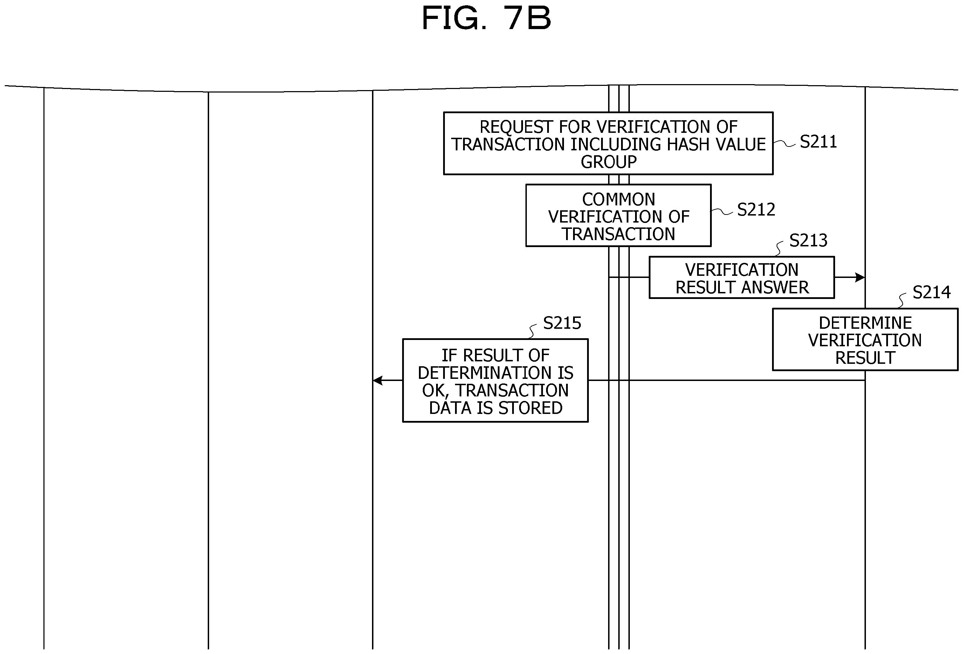

FIGs. 7A and 7B illustrate a sequence diagram for explaining an example of a processing procedure executed when a transaction which is a verification target of a unique policy occurs.

For example, when the communication unit 11a of the peer 10a receives a request for execution of a certain transaction from the user terminal 20 (S201), data indicating the content of the transaction (hereinafter, referred to as "target transaction data") is generated (S202). Subsequently, the communication unit 11a transmits the request for verification of the target transaction data to each peer 10 (S203).

When the communication unit 11 of each peer 10 receives the request for verification, the transaction verification determination unit 13 of each peer 10 executes the common verification of the target transaction data included in the request for verification (S204). Subsequently, the transaction verification determination unit 13 of each peer 10 executes the verification (hereinafter, referred to as "unique verification") for the target transaction data based on the unique policy of each peer 10 (S205). Specifically, the transaction verification determination unit 13 inputs the input value for the unique policy of each peer 10 and obtains the final output value of the unique policy. Here, the input value for the unique policy is not limited to the value included in the target transaction data. For example, if a function that compares or collates the information uniquely held by a certain peer 10 (for example, a list of some values) with a value included in the target transaction data is included in the unique policy, the uniquely held information is also the input value for the unique policy.

The unique policy of each peer 10 is stored in the policy DB 15 of each peer 10 by step S101 in FIG. 4 being executed for each peer 10. In addition, since the unique policy of each peer 10 is a content unique to each peer 10, and is different from each other in each of the peers 10. Therefore, in the unique verification, the verification different from each other is performed on each peer 10 for the target transaction data. Subsequently, the communication unit 11 of each peer 10 transmits an answer including the verification result (YES or NO that is the final output value) of unique verification to the peer 10x (S206) .

When the communication unit 11x of peer 10x receives the answer from each peer 10, the transaction verification determination unit 13x of the peer 10x determines the verification result of the target transaction data based on the answer from each peer 10 (S207). For example, the target transaction data may be determined to be OK when all the verification results by each peer 10 are YES, or the determination whether the target transaction data is OK or NG may be performed based on other methods (for example, majority vote). If the result of determination is OK, the communication unit 11x stores the target transaction data in the blockchain C1 (S208). At this time, the communication unit 11x also registers the verification result (YES or NO) from each peer 10 in the blockchain C1 together with the target transaction data. That is, the target transaction data and each verification result are registered in the ledger x, and the result of registration in the ledger x is also reflected in the ledger of each of other peers 10.

On the other hand, subsequent to step S206, the transaction verification determination unit 13 of each peer 10 that performs the verification of the target transaction data stores data in which the input value of each function included in the unique policy used in the unique verification of step S205, the node ID of the input value, and the output value from each function and the node ID of the output value are associated with the transaction ID of the target transaction data, in the verification record data DB 16 as the verification record data (S209). Subsequently, the transaction verification determination unit 13 of each peer 10 calculates a hash value for each of the input values and the output values included in the verification record data (S210). For example, the hash value may be calculated by encrypting the input value or the output value with the public key associated with the private key held by each peer 10. For example, the hash value may be calculated by encrypting the input value or the output value with the common key held by each peer 10. However, since the output value corresponding to the final output value of the unique policy is stored in the blockchain C1, the output value may be excluded from the hash value calculation target.

Subsequently, the communication unit 11 of each peer 10 transmits a request for verification of the transaction data including the transaction ID of the target transaction data and the hash value group to each peer 10 (S211). That is, the request for verification of the transaction data is transmitted from each peer 10 that performed the unique verification to each peer 10. Therefore, in step S211, the request for verification is transmitted from each peer 10 for each of a plurality of transaction data. Hereinafter, for the convenience, step S212 and subsequent steps will be described by focusing on one transaction data (hereinafter, referred to as a "target transaction data") among the plurality of transaction data, but step S212 and subsequent steps are executed for each transaction data. In each transaction data, each hash value is associated with the node ID of the node in the concealed structure data.

In step S212, when the communication unit 11 of each peer 10 receives the target transaction data, the transaction verification determination unit 13 of each peer 10 executes the common verification of the target transaction data (S212). For example, it may be verified that the target transaction data includes a transaction ID and the hash value group that is associated with the node ID. Subsequently, the communication unit 11 of each peer 10 transmits an answer including the verification result of common verification to the peer 10x (S213). If the peer 10x is not included in each peer 10, the target transaction data is also transmitted to the peer 10x.

When the communication unit 11x of the peer 10x receives the answer from each peer 10, the transaction verification determination unit 13x of the peer 10x determines the verification result of the target transaction data based on the answer from each peer 10 (S214). For example, the target transaction data may be determined to be OK when all the verification results by each peer 10 are OK, or the determination whether the target transaction data is OK or NG may be performed based on other methods (for example, majority vote). If the result of determination is OK, the communication unit 11x stores the target transaction data (That is, the transaction ID and the hash value group associated with the node ID) in the blockchain C1 (S215). That is, the target transaction data is registered in the ledger x, and the result of registration in the ledger x is also reflected in the ledger of each of other peers 10.

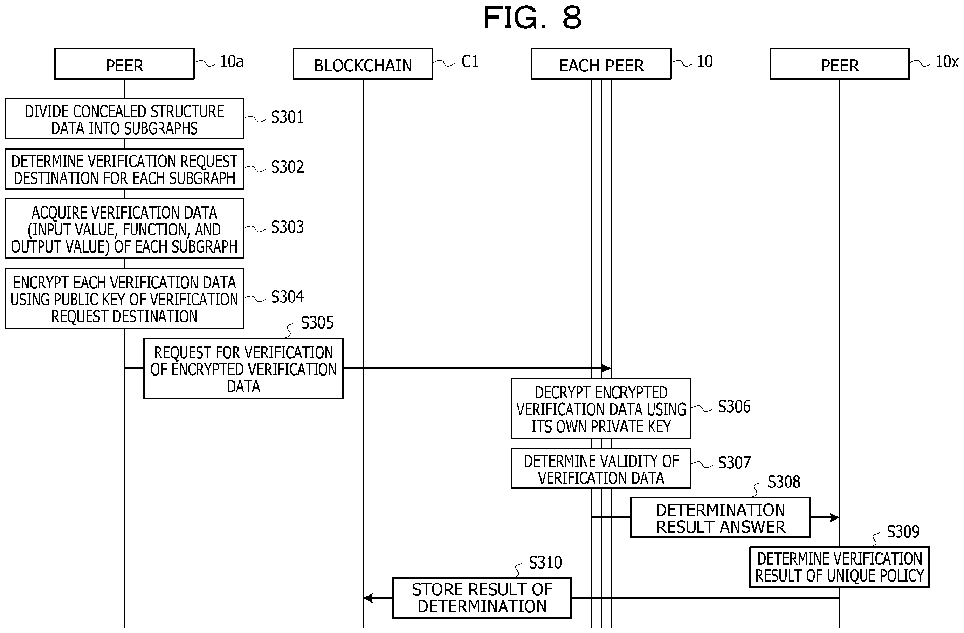

FIG. 8 is a sequence diagram for explaining an example of a processing procedure of the unique policy verification processing. FIG. 8 illustrates an example in which the unique policy of the peer 10a is a verification target (hereinafter, the unique policy of the peer 10a is called a "target unique policy"). If the unique policy of another peer 10 is used as the verification target, the processing procedure may be executed, in which another peer 10 and the peer 10a are replaced in FIG. 8. The processing procedure in FIG. 8 may be started voluntarily by the peer 10a or may be started in response to a request from another peer 10, for example.

In step S301, the unique policy verification unit 14a divides the concealed structure data d1 registered in the blockchain C1 for the target unique policy into a plurality of subgraphs. The division into the subgraphs may be performed, for example, for each set of equal to or more than one functions.

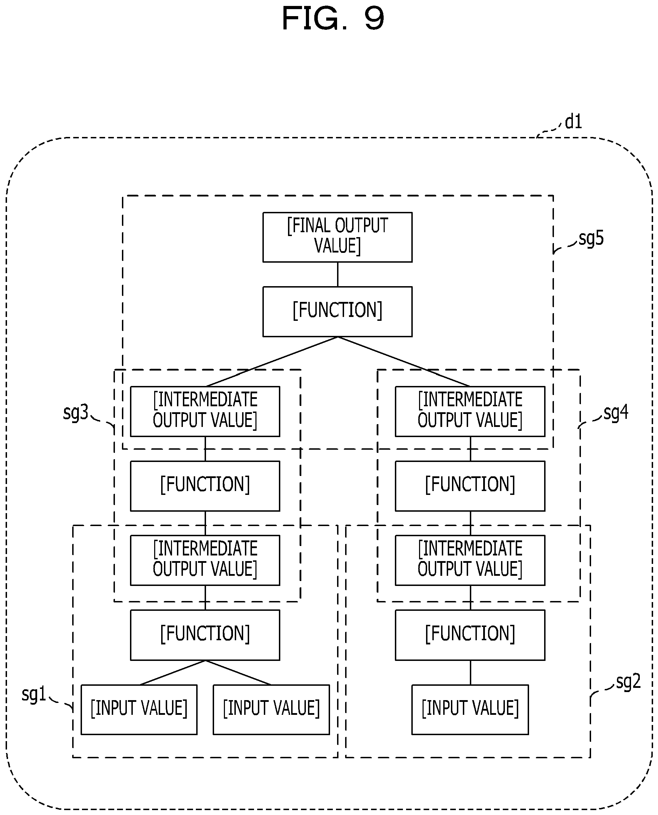

FIG. 9 illustrates an example of dividing the concealed structure data into the subgraphs. FIG. 9 illustrates an example in which the concealed structure data d1 illustrated in FIG. 6 is divided into five subgraphs sg1 to sg5. In FIG. 9, an example in which each subgraph includes one function is illustrated. That is, in FIG. 9, each subgraph is a graph including the node ID of one function, the node ID of the input value to the function, and the node ID of the output value from the function. In FIG. 9, the input value of the function of the subgraph sg3 is also the intermediate output value of the subgraph sg1, and the output value of the function is also the input value of the subgraph sg5. Similarly, the input value of the function of the subgraph sg4 is also the intermediate output value of the subgraph sg2, and the output value of the function is also the input value of the subgraph sg5.

Subsequently, the unique policy verification unit 14a determines a verification request destination of the subgraph for each subgraph (S302). The verification request destination of one subgraph may be one peer 10 or may be a plurality of peers 10. However, it is not preferable that one peer 10 be the verification request destination of a plurality of subgraphs. From the viewpoint of concealment of the unique policy, it is desirable that the verification request destinations of each subgraph be different from each other.

Subsequently, the unique policy verification unit 14a acquires a raw value (actual value) of the input value to the subgraph and the output value from the subgraph regarding the verification transaction for each subgraph from the verification record data stored in the verification record data DB 16 in association with the transaction ID of the past transaction used for the verification (hereinafter, referred to as a "verification transaction"), and acquires the specific content of the function included in the subgraph from the policy DB 15 (S303). The input value, output value and function may be acquired based on each node ID included in the verification record data. That is, in the policy DB 15, the node IDs may be associated with the functions that configures the unique policy. Hereinafter, the data including the transaction ID of the verification transaction, the raw values of the input value and the output value of one subgraph, the specific content of the function, and the respective node ID will be referred to as "verification data".

Here, the verification transaction may basically be any of the past transactions, and may be one or more. For example, "all the transactions within a certain period in the past" may be the verification transaction. Alternatively, one or a plurality of transactions among the past transactions may be randomly selected. However, considering that the unique policy of the verification target is the unique policy of the peer 10a, it is not preferable that the peer 10a may be selected as the verification transaction. Therefore, which transaction among the past transactions is to be the verification transaction may be selected by the agreement between the peers 10 or may be selected by the peer 10 that has requested the verification.

Subsequently, the unique policy verification unit 14a encrypts the verification data of the subgraph for each subgraph using the public key associated with the private key held by peer 10 of the verification request destination of the subgraph (S304). In addition, for example, the verification data of the subgraph may be encrypted using a common key commonly held by the peer 10a and the peer 10 of the verification request destination. The verification data includes the input value to the unique policy. The input value may include information that peer 10a does not want to disclose. By encrypting the verification data, it is possible to reduce the possibility of leaking such information. Hereinafter, the encrypted verification data is referred to as "encrypted verification data". Subsequently, the communication unit 11a transmits the encrypted verification data of the subgraph to the verification request destination of the subgraph for each subgraph (S305). Therefore, the encrypted verification data of different subgraphs are transmitted to the plurality of peers 10.

When the communication unit 11 of each peer 10 of the verification request destination receives the encrypted verification data addressed to the peer 10, the unique policy verification unit 14 of each peer 10 decrypts the encrypted verification data received by the communication unit 11 of the peer 10 using the private key held by the peer 10 (S306). As a result, in each peer 10, the verification data (the transaction ID of the verification transaction, the input value ID and its node ID, the function and its node ID, the output value and its node ID) of the subgraph of which the peer 10 is the verification request destination is obtained.

Subsequently, the unique policy verification unit 14 of each peer 10 determines the validity of the verification data (S307). For example, the determination of the validity includes a determination of whether or not the input value, the function, and the output value included in the verification data correctly correspond to each other (hereinafter, referred to as a "first determination"), and a determination of whether or not the input value, the function and the output value are correct from the beginning (whether or not it was actually used in the past verification of the transaction) (hereinafter, referred to as a "second determination").

In the first determination, the unique policy verification unit 14 determines whether or not the value output from the function matches the output value of the verification data by inputting the input value of verification data into the function of the verification data. That is, if the compared values match each other, the unique policy verification unit 14 determines that the input value, the function and the output value of the verification data correctly correspond to each other (the result of determination in this case is referred to as "OK"). On the other hand, if the compared values are different from each other, the unique policy verification unit 14 determines that the input value, the function and the output value of the verification data do not correctly correspond to each other (the result of determination in this case is referred to as "NG").

In addition, in the second determination, the unique policy verification unit 14 calculates the hash value of each input value, each function and each output value included in the verification data. For example, the hash value may be calculated by encrypting each value with the public key of peer 10a. For example, the hash value may be calculated by encrypting each value with a common key held by the peer 10a and another peer 10. In addition, for each input value and each output value, the unique policy verification unit 14 acquires the hash value stored in the blockchain C1 for each input value and each output value of the verification data based on the node ID included in the verification data and the transaction ID included in the verification data. In addition, the unique policy verification unit 14 acquires the hash value stored in the blockchain C1 for each function of the verification data based on the node ID included in the verification data for each function. If the hash value group calculated by itself and the hash value group acquired from the blockchain C1 match each other, the unique policy verification unit 14 determines that the input value, the function and the output value of the verification data are correct (the result of determination in this case is referred to as "OK"). On the other hand, if the hash value group calculated by itself and the hash value group acquired from the blockchain C1 do not match each other, the unique policy verification unit 14 determines that the input value, the function and the output value of the verification data are incorrect (the result of determination in this case is referred to as "NG"). The final output value is stored in the blockchain C1, and thus, the second determination may not be performed.

When the result of determination for the first determination and the second determination are OK, the unique policy verification unit 14 sets the result of determination for the validity of the verification data to be OK, and otherwise, the unique policy verification unit 14 sets the result of determination for the validity of the verification data to be NG.

Subsequently, the communication unit 11 of each peer 10 transmits the result of determination by the unique policy verification unit 14 of each peer 10 to the peer 10x (S308).

When the communication unit 11x of the peer 10x receives the result of determination of each peer 10, the unique policy verification unit 14x of the peer 10x determines a verification result of the target unique policy based on the result of determination from each peer 10 (S309). For example, if all the results of determination by another peer 10 are OK, the target policy may be determined to be valid (the verification result is OK), and if not, the target policy may be determined to be invalid (the verification result is NG (changed to other peer 10 without permission)). Subsequently, the communication unit 11x of peer 10x stores the result of determination performed by the unique policy verification unit 14x in the blockchain C1 (S310).

In the description above, an example in which the content of the unique policy relates to the sensor data is described (refer to FIG. 5), but other examples of the unique policy will be described below.

### [Specific Example 1 of Unique Policy: A case of Banking Transaction]

A case of applying the present embodiment to a bank deposit transaction will be described. For example, in addition to a verification for superficial transaction such as "whether an amount of remittance exceeds the deposit balance of the remitter", a case of verifying whether the participants of the blockchain network (the peer 10) is possible to perform the remittance with their unique logic (unique policy) may be considered.

Examples of the input values used for the verification are as follows.
(1) Number of remittances performed by the remitter within one week
(2) Total remittance amount by the remitter within one week
(3) Dollar ratio value of the remitted currency
(4) Stock price fluctuation ratio of a company to which the remitter belongs

In this case, following policy 1 and policy 2 are given as examples of the unique policy of each peer 10.

### [Policy 1]

If (the number of remittances is equal to or less than 10 and the total remittance amount is less than 500000) or the ratio value is lower than 2.5,
the verification result of the remittance transaction is set to be OK, and if not, the verification result is set to be NG.

### [Policy 2]

If (the total remittance amount is less than 100000 or the ratio value is lower than 1.5) and the stock price fluctuation ratio of the company is higher than 0.8 and lower than 1.2,
the verification result of the remittance transaction is set to be OK, and if not, the verification result is set to be NG.

### [Specific Example 2 of Unique Policy 1: A case of Supply Chain]

A case of applying the present embodiment to a delivery system in a supply chain will be described. Similar to the specific example 1 described above, a case of verifying whether the participants of the blockchain network (the peer 10) is possible to perform the remittance with their unique logic (unique policy) may be considered.

Examples of the input values used for the verification are as follows.
(1) Estimated value of man-hour for each delivery company A, B, C, and D
(2) Estimated value of delivery quality for each delivery company A, B, C, and D
(3) Weather on the day (sunny: 1, cloudy: 2, rain: 3, and others: 4)

In this case, following policy 1 and policy 2 are given as examples of the unique policy of each peer 10.

### [Policy 1]

If (the man-hour for the delivery company A is equal to or larger than 3 or the man-hour of the delivery company B is equal to or larger than 4) and the weather is smaller than 3,
the verification result of the delivery transaction is set to be OK, and if not, the verification result is set to be NG.

### [Policy 2]

If ((the man-hour of the delivery company B is equal to or larger than 2 and the quality value of the delivery company B is equal to or larger than 5) or the man-hour of the delivery company C is equal to or larger than 5) and the weather is smaller than 2,
the verification result of the delivery transaction is set to be OK, and if not, the verification result is set to be NG.

As described above, according to the present embodiment, it is possible for each peer 10 to use a unique policy as a verification policy in addition to the common policy. Therefore, each participant (peer 10) may reflect his/her intention in the verification of the transaction data. For example, if each peer 10 is a company, each company may use the verification policy that is convenient for the company to verify the transaction data. As a result, it is possible to increase the willingness to participate in the blockchain network.

In addition, in the present embodiment, for each part (for each function) of the verification policy, the verification of the part may be performed by the separate peer 10. As a result, even if each peer 10 uses the unique policy for the verification of the transaction, it is possible to suppress the unique policy from being changed illegally (without permission from other peers 10) due to the conditions of each peer 10. Therefore, it is possible for each peer 10 to use the unique policy (diversification of transaction verification policy), and it is possible to increase the willingness to participate in the blockchain network due to the fact that the unique policy may be used.

In addition, since the unique policy may be the information that the peer 10 does not want to disclose to the public, in the present embodiment, only a part of the unique policy is disclosed to each verification request destination of the unique policy. Therefore, it is possible to avoid the entire unique policy to be disclosed to a certain peer 10.

That is, when building a blockchain network of which the verification policy is different depending on each peer 10, it is desired to guarantee the validity (not changed) of the unique policy, but another peer 10 requests for the verification of the unique policy of a certain peer 10, it may not be desirable to disclose the raw value of the unique policy. That is, according to the present embodiment, it is possible to satisfy the conflicting requests such as "do not disclose the raw value of the unique policy of one peer 10 to another peer 10" and "allow other peer 10 to verify that the unique policy is correct".

In the present embodiment, the peer 10 is an example of a verification apparatus. The unique policy verification unit 14 is an example of an acquisition unit and a verification unit. The communication unit 11 is an example of a transmission unit. The public key associated with the private key held by the peer 10 or the common key held by each peer 10 is an example of an encryption key.

As above, the embodiment of the present invention have been described in detail, however, the present invention is not limited to such a specific embodiment, and various modifications changes are possible within the scope of the present invention described in the claims.

### [CITATION LIST]

### [PATENT LITERATURE]

Japanese Laid-open Patent Publication No. 2019-74910.

### [REFERENCE SIGNS LIST]

1 transaction management system
10 peer
11 communication unit
12 policy registration unit
13 transaction verification determination unit
14 unique policy verification unit
15 policy DB
16 verification record data DB
20 user terminal
100 drive device
101 recording medium
102 auxiliary storage device
103 memory device
104 CPU
105 interface device
B bus
C1 blockchain

## Claims

1. A verification method implemented by a computer operable as any of a plurality of nodes included in a blockchain network, the method comprising:
obtaining a verification policy with respect to a blockchain, the verification policy including a plurality of logics, each logic being configured to receive a respective input value and output a respective output value, at least any one of the plurality of logics being configured to receive an output value outputted from another logic;
obtaining, for each logic included in the obtained verification policy, an input value and an output value from verification record data of a transaction data stored in the blockchain;
transmitting a first verification request to a first node included in the blockchain network, the first verification request including a first logic from among the plurality of logics and the obtained input and output values with respect to the first logic, the transmitting of the first verification request being configured to cause the first node to verify the first logic in accordance with the obtained input and output values with respect to the first logic; and
transmitting a second verification request to a second node included in the blockchain network, the second verification request including a second logic from among the plurality of logics and the obtained input and output values with respect to the second logic, the transmitting of the second verification request being configured to cause the second node to verify the second logic in accordance with the obtained input and output values with respect to the second logic, the second node being any of the plurality of nodes other than the first node, the second logic being any of the plurality of logics other than the first logic.

2. The verification method according to claim 1,
wherein the transmitting of the first verification request is configured to encrypt the obtained input and output values with respect to the first logic, the first verification request including the first logic and the encrypted input and output values with respect to the first logic.

3. The verification method according to claim 2,
wherein the transmitting of the second verification request is configured to encrypt the obtained input and output values with respect to the second logic, the second verification request including the second logic and the encrypted input and output values with respect to the second logic.

4. The verification method according to claim 1, the method further comprising:
in response to the transmitting of the first verification request, receiving a first verification result with respect to the first logic from the first node in the blockchain network; and
in response to the transmitting of the second verification request, receiving a second verification result with respect to the second logic from the second node in the blockchain network.

5. A verification apparatus comprising:
a memory; and
a processor coupled to the memory, the processor being configured to perform processing, the processing including:
obtaining a verification policy with respect to a blockchain, the verification policy including a plurality of logics, each logic being configured to receive a respective input value and output a respective output value, at least any one of the plurality of logics being configured to receive an output value outputted from another logic;
obtaining, for each logic included in the obtained verification policy, an input value and an output value from verification record data of a transaction data stored in the blockchain;
transmitting a first verification request to a first node included in the blockchain network, the first verification request including a first logic from among the plurality of logics and the obtained input and output values with respect to the first logic, the transmitting of the first verification request being configured to cause the first node to verify the first logic in accordance with the obtained input and output values with respect to the first logic; and
transmitting a second verification request to a second node included in the blockchain network, the second verification request including a second logic from among the plurality of logics and the obtained input and output values with respect to the second logic, the transmitting of the second verification request being configured to cause the second node to verify the second logic in accordance with the obtained input and output values with respect to the second logic, the second node being any of the plurality of nodes other than the first node, the second logic being any of the plurality of logics other than the first logic.

6. The verification apparatus according to claim 5,
wherein the transmitting of the first verification request is configured to encrypt the obtained input and output values with respect to the first logic, the first verification request including the first logic and the encrypted input and output values with respect to the first logic.

7. The verification apparatus according to claim 6,
wherein the transmitting of the second verification request is configured to encrypt the obtained input and output values with respect to the second logic, the second verification request including the second logic and the encrypted input and output values with respect to the second logic.

8. The verification apparatus according to claim 5, the processing further comprising:
in response to the transmitting of the first verification request, receiving a first verification result with respect to the first logic from the first node in the blockchain network; and
in response to the transmitting of the second verification request, receiving a second verification result with respect to the second logic from the second node in the blockchain network.

9. A verification program comprising instructions which, when the program is executed by a computer, cause the computer to carry out processing, the processing including:
obtaining a verification policy with respect to a blockchain, the verification policy including a plurality of logics, each logic being configured to receive a respective input value and output a respective output value, at least any one of the plurality of logics being configured to receive an output value outputted from another logic;
obtaining, for each logic included in the obtained verification policy, an input value and an output value from verification record data of a transaction data stored in the blockchain;
transmitting a first verification request to a first node included in the blockchain network, the first verification request including a first logic from among the plurality of logics and the obtained input and output values with respect to the first logic, the transmitting of the first verification request being configured to cause the first node to verify the first logic in accordance with the obtained input and output values with respect to the first logic; and
transmitting a second verification request to a second node included in the blockchain network, the second verification request including a second logic from among the plurality of logics and the obtained input and output values with respect to the second logic, the transmitting of the second verification request being configured to cause the second node to verify the second logic in accordance with the obtained input and output values with respect to the second logic, the second node being any of the plurality of nodes other than the first node, the second logic being any of the plurality of logics other than the first logic.

10. The verification program according to claim 9,
wherein the transmitting of the first verification request is configured to encrypt the obtained input and output values with respect to the first logic, the first verification request including the first logic and the encrypted input and output values with respect to the first logic.

11. The verification program according to claim 10,
wherein the transmitting of the second verification request is configured to encrypt the obtained input and output values with respect to the second logic, the second verification request including the second logic and the encrypted input and output values with respect to the second logic.

12. The verification program according to claim 9, the method further comprising:
in response to the transmitting of the first verification request, receiving a first verification result with respect to the first logic from the first node in the blockchain network; and
in response to the transmitting of the second verification request, receiving a second verification result with respect to the second logic from the second node in the blockchain network.

## Patentansprüche

1. Verifizierungsverfahren, das von einem Computer implementiert ist, der als einer von einer Vielzahl von Knoten, die in einem Blockchain-Netzwerk eingeschlossen sind, betriebsfähig ist, wobei das Verfahren Folgendes umfasst:
Erhalten einer Verifizierungsrichtlinie in Bezug auf eine Blockchain, wobei die Verifizierungsrichtlinie eine Vielzahl von Logiken einschließt, wobei jede Logik konfiguriert ist, um einen jeweiligen Eingabewert zu empfangen und einen jeweiligen Ausgabewert auszugeben, wobei mindestens eine der Vielzahl von Logiken konfiguriert ist, um einen Ausgabewert zu empfangen, der von einer anderen Logik ausgegeben wurde;
Erhalten für jede Logik, die in der erhaltenen Verifizierungsrichtlinie eingeschlossen ist, eines Eingabewerts und eines Ausgabewerts von Verifizierungsaufzeichnungsdaten von in der Blockchain gespeicherten Transaktionsdaten;
Übertragen einer ersten Verifizierungsanfrage an einen ersten Knoten, der in dem Blockchain-Netzwerk eingeschlossen ist, wobei die erste Verifizierungsanfrage eine erste Logik aus der Vielzahl von Logiken und die erhaltenen Eingabe- und Ausgabewerte in Bezug auf die erste Logik einschließt, wobei Übertragen der ersten Verifizierungsanfrage konfiguriert ist, um zu verursachen, dass der erste Knoten die erste Logik gemäß den erhaltenen Eingabe- und Ausgabewerten in Bezug auf die erste Logik verifiziert; und
Übertragen einer zweiten Verifizierungsanfrage an einen zweiten Knoten, der in dem Blockchain-Netzwerk eingeschlossen ist, wobei die zweite Verifizierungsanfrage eine zweite Logik aus der Vielzahl von Logiken und die erhaltenen Eingabe- und Ausgabewerte in Bezug auf die zweite Logik einschließt, wobei Übertragen der zweiten Verifizierungsanfrage konfiguriert ist, um zu verursachen, dass der zweite Knoten die zweite Logik gemäß der erhaltenen Eingabe- und Ausgabewerte in Bezug auf die zweite Logik verifiziert, wobei der zweite Knoten ein anderer der Vielzahl von Knoten ist als der erste Knoten, wobei die zweite Logik eine andere der Vielzahl von Logiken ist als die erste Logik.

2. Verifizierungsverfahren nach Anspruch 1,
wobei Übertragen der ersten Verifizierungsanfrage konfiguriert ist, um die erhaltenen Eingabe- und Ausgabewerte in Bezug auf die erste Logik zu verschlüsseln, wobei die erste Verifizierungsanfrage die erste Logik und die verschlüsselten Eingabe- und Ausgabewerte in Bezug auf die erste Logik einschließt.

3. Verifizierungsverfahren nach Anspruch 2,
wobei Übertragen der zweiten Verifizierungsanfrage konfiguriert ist, um die erhaltenen Eingabe- und Ausgabewerte in Bezug auf die zweite Logik zu verschlüsseln, wobei die zweite Verifizierungsanfrage die zweite Logik und die verschlüsselten Eingabe- und Ausgabewerte in Bezug auf die zweite Logik einschließt.

4. Verifizierungsverfahren nach Anspruch 1, wobei das Verfahren weiter Folgendes umfasst:
als Antwort auf Übertragen der ersten Verifizierungsanfrage, Empfangen eines ersten Verifizierungsergebnisse in Bezug auf die erste Logik von dem ersten Knoten in dem Blockchain-Netzwerk; und
als Antwort auf Übertragen der zweiten Verifizierungsanfrage, Empfangen eines zweiten Verifizierungsergebnisses in Bezug auf die zweite Logik von dem zweiten Knoten in dem Blockchain-Netzwerk.

5. Verifizierungsgerät, umfassend:
einen Speicher; und
einen Prozessor, der mit dem Speicher gekoppelt ist, wobei der Prozessor konfiguriert ist, um Verarbeitung durchzuführen, wobei die Verarbeitung Folgendes einschließt:
Erhalten einer Verifizierungsrichtlinie in Bezug auf eine Blockchain, wobei die Verifizierungsrichtlinie eine Vielzahl von Logiken einschließt, wobei jede Logik konfiguriert ist, um einen jeweiligen Eingabewert zu empfangen und einen jeweiligen Ausgabewert auszugeben, wobei mindestens eine der Vielzahl von Logiken konfiguriert ist, um einen Ausgabewert zu empfangen, der von einer anderen Logik ausgegeben wurde;
Erhalten für jede Logik, die in der erhaltenen Verifizierungsrichtlinie eingeschlossen ist, eines Eingabewerts und eines Ausgabewerts von Verifizierungsaufzeichnungsdaten von in der Blockchain gespeicherten Transaktionsdaten;
Übertragen einer ersten Verifizierungsanfrage an einen ersten Knoten, der in dem Blockchain-Netzwerk eingeschlossen ist, wobei die erste Verifizierungsanfrage eine erste Logik aus der Vielzahl von Logiken und die erhaltenen Eingabe- und Ausgabewerte in Bezug auf die erste Logik einschließt, wobei Übertragen der ersten Verifizierungsanfrage konfiguriert ist, um zu verursachen, dass der erste Knoten die erste Logik gemäß den erhaltenen Eingabe- und Ausgabewerten in Bezug auf die erste Logik verifiziert; und
Übertragen einer zweiten Verifizierungsanfrage an einen zweiten Knoten, der in dem Blockchain-Netzwerk eingeschlossen ist, wobei die zweite Verifizierungsanfrage eine zweite Logik aus der Vielzahl von Logiken und die erhaltenen Eingabe- und Ausgabewerte in Bezug auf die zweite Logik einschließt, wobei Übertragen der zweiten Verifizierungsanfrage konfiguriert ist, um zu verursachen, dass der zweite Knoten die zweite Logik gemäß der erhaltenen Eingabe- und Ausgabewerte in Bezug auf die zweite Logik verifiziert, wobei der zweite Knoten ein anderer der Vielzahl von Knoten ist als der erste Knoten, wobei die zweite Logik eine andere der Vielzahl von Logiken ist als die erste Logik.

6. Verifizierungsgerät nach Anspruch 5,
wobei Übertragen der ersten Verifizierungsanfrage konfiguriert ist, um die erhaltenen Eingabe- und Ausgabewerte in Bezug auf die erste Logik zu verschlüsseln, wobei die erste Verifizierungsanfrage die erste Logik und die verschlüsselten Eingabe- und Ausgabewerte in Bezug auf die erste Logik einschließt.

7. Verifizierungsgerät nach Anspruch 6,
wobei Übertragen der zweiten Verifizierungsanfrage konfiguriert ist, um die erhaltenen Eingabe- und Ausgabewerte in Bezug auf die zweite Logik zu verschlüsseln, wobei die zweite Verifizierungsanfrage die zweite Logik und die verschlüsselten Eingabe- und Ausgabewerte in Bezug auf die zweite Logik einschließt.

8. Verifizierungsgerät nach Anspruch 5, wobei die Verarbeitung weiter Folgendes umfasst:
als Antwort auf Übertragen der ersten Verifizierungsanfrage, Empfangen eines ersten Verifizierungsergebnisse in Bezug auf die erste Logik von dem ersten Knoten in dem Blockchain-Netzwerk; und
als Antwort auf Übertragen der zweiten Verifizierungsanfrage, Empfangen eines zweiten Verifizierungsergebnisses in Bezug auf die zweite Logik von dem zweiten Knoten in dem Blockchain-Netzwerk.

9. Verifizierungsprogramm, das Anweisungen umfasst, die, wenn das Programm von einem Computer ausgeführt wird, verursachen, dass der Computer Verarbeitung ausführt, wobei die Verarbeitung Folgendes einschließt:
Erhalten einer Verifizierungsrichtlinie in Bezug auf eine Blockchain, wobei die Verifizierungsrichtlinie eine Vielzahl von Logiken einschließt, wobei jede Logik konfiguriert ist, um einen jeweiligen Eingabewert zu empfangen und einen jeweiligen Ausgabewert auszugeben, wobei mindestens eine der Vielzahl von Logiken konfiguriert ist, um einen Ausgabewert zu empfangen, der von einer anderen Logik ausgegeben wurde;
Erhalten für jede Logik, die in der erhaltenen Verifizierungsrichtlinie eingeschlossen ist, eines Eingabewerts und eines Ausgabewerts von Verifizierungsaufzeichnungsdaten von in der Blockchain gespeicherten Transaktionsdaten;
Übertragen einer ersten Verifizierungsanfrage an einen ersten Knoten, der in dem Blockchain-Netzwerk eingeschlossen ist, wobei die erste Verifizierungsanfrage eine erste Logik aus der Vielzahl von Logiken und die erhaltenen Eingabe- und Ausgabewerte in Bezug auf die erste Logik einschließt, wobei Übertragen der ersten Verifizierungsanfrage konfiguriert ist, um zu verursachen, dass der erste Knoten die erste Logik gemäß den erhaltenen Eingabe- und Ausgabewerten in Bezug auf die erste Logik verifiziert; und
Übertragen einer zweiten Verifizierungsanfrage an einen zweiten Knoten, der in dem Blockchain-Netzwerk eingeschlossen ist, wobei die zweite Verifizierungsanfrage eine zweite Logik aus der Vielzahl von Logiken und die erhaltenen Eingabe- und Ausgabewerte in Bezug auf die zweite Logik einschließt, wobei Übertragen der zweiten Verifizierungsanfrage konfiguriert ist, um zu verursachen, dass der zweite Knoten die zweite Logik gemäß der erhaltenen Eingabe- und Ausgabewerte in Bezug auf die zweite Logik verifiziert, wobei der zweite Knoten ein anderer der Vielzahl von Knoten ist als der erste Knoten, wobei die zweite Logik eine andere der Vielzahl von Logiken ist als die erste Logik.

10. Verifizierungsprogramm nach Anspruch 9,
wobei Übertragen der ersten Verifizierungsanfrage konfiguriert ist, um die erhaltenen Eingabe- und Ausgabewerte in Bezug auf die erste Logik zu verschlüsseln, wobei die erste Verifizierungsanfrage die erste Logik und die verschlüsselten Eingabe- und Ausgabewerte in Bezug auf die erste Logik einschließt.

11. Verifizierungsprogramm nach Anspruch 10,
wobei Übertragen der zweiten Verifizierungsanfrage konfiguriert ist, um die erhaltenen Eingabe- und Ausgabewerte in Bezug auf die zweite Logik zu verschlüsseln, wobei die zweite Verifizierungsanfrage die zweite Logik und die verschlüsselten Eingabe- und Ausgabewerte in Bezug auf die zweite Logik einschließt.

12. Verifizierungsprogramm nach Anspruch 9, wobei das Verfahren weiter Folgendes umfasst:
als Antwort auf Übertragen der ersten Verifizierungsanfrage, Empfangen eines ersten Verifizierungsergebnisse in Bezug auf die erste Logik von dem ersten Knoten in dem Blockchain-Netzwerk; und
als Antwort auf Übertragen der zweiten Verifizierungsanfrage, Empfangen eines zweiten Verifizierungsergebnisses in Bezug auf die zweite Logik von dem zweiten Knoten in dem Blockchain-Netzwerk.

## Revendications

1. Procédé de vérification mis en œuvre par un ordinateur pouvant fonctionner comme l'un quelconque d'une pluralité de nœuds inclus dans un réseau de chaîne de blocs, le procédé comprenant les étapes consistant à :
obtenir une politique de vérification par rapport à une chaîne de blocs, la politique de vérification incluant une pluralité de logiques, chaque logique étant configurée pour recevoir une valeur d'entrée respective et délivrer en sortie une valeur de sortie respective, au moins l'une quelconque de la pluralité de logiques étant configurée pour recevoir une valeur de sortie délivrée en sortie par une autre logique ;
obtenir, pour chaque logique incluse dans la politique de vérification obtenue, une valeur d'entrée et une valeur de sortie à partir de données d'enregistrement de vérification de données de transaction stockées dans la chaîne de blocs ;
transmettre une première demande de vérification à un premier nœud inclus dans le réseau de chaîne de blocs, la première demande de vérification incluant une première logique parmi la pluralité de logiques et les valeurs d'entrée et de sortie obtenues par rapport à la première logique, la transmission de la première demande de vérification étant configurée pour amener le premier nœud à vérifier la première logique conformément aux valeurs d'entrée et de sortie obtenues par rapport à la première logique ; et
transmettre une seconde demande de vérification à un second nœud inclus dans le réseau de chaîne de blocs, la seconde demande de vérification incluant une seconde logique parmi la pluralité de logiques et les valeurs d'entrée et de sortie obtenues par rapport à la seconde logique, la transmission de la seconde demande de vérification étant configurée pour amener le second nœud à vérifier la seconde logique conformément aux valeurs d'entrée et de sortie obtenues par rapport à la seconde logique, le second nœud étant l'un quelconque de la pluralité de nœuds autre que le premier nœud, la seconde logique étant l'une quelconque de la pluralité de logiques autre que la première logique.

2. Procédé de vérification selon la revendication 1,
dans lequel la transmission de la première demande de vérification est configurée pour crypter les valeurs d'entrée et de sortie obtenues par rapport à la première logique, la première demande de vérification incluant la première logique et les valeurs d'entrée et de sortie cryptées par rapport à la première logique.

3. Procédé de vérification selon la revendication 2,
dans lequel la transmission de la seconde demande de vérification est configurée pour crypter les valeurs d'entrée et de sortie obtenues par rapport à la seconde logique, la seconde demande de vérification incluant la seconde logique et les valeurs d'entrée et de sortie cryptées par rapport à la seconde logique.

4. Procédé de vérification selon la revendication 1, le procédé comprenant en outre les étapes consistant à :
en réponse à la transmission de la première demande de vérification, recevoir un premier résultat de vérification par rapport à la première logique en provenance du premier nœud dans le réseau de chaîne de blocs ; et
en réponse à la transmission de la seconde demande de vérification, recevoir un second résultat de vérification par rapport à la seconde logique en provenance du second nœud dans le réseau de chaîne de blocs.

5. Appareil de vérification comprenant :
une mémoire ; et
un processeur couplé à la mémoire, le processeur étant configuré pour effectuer un traitement, le traitement incluant les étapes consistant à :
obtenir une politique de vérification par rapport à une chaîne de blocs, la politique de vérification incluant une pluralité de logiques, chaque logique étant configurée pour recevoir une valeur d'entrée respective et délivrer en sortie une valeur de sortie respective, au moins l'une quelconque de la pluralité de logiques étant configurée pour recevoir une valeur de sortie délivrée en sortie par une autre logique ;
obtenir, pour chaque logique incluse dans la politique de vérification obtenue, une valeur d'entrée et une valeur de sortie à partir de données d'enregistrement de vérification de données de transaction stockées dans la chaîne de blocs ;
transmettre une première demande de vérification à un premier nœud inclus dans le réseau de chaîne de blocs, la première demande de vérification incluant une première logique parmi la pluralité de logiques et les valeurs d'entrée et de sortie obtenues par rapport à la première logique, la transmission de la première demande de vérification étant configurée pour amener le premier nœud à vérifier la première logique conformément aux valeurs d'entrée et de sortie obtenues par rapport à la première logique ; et
transmettre une seconde demande de vérification à un second nœud inclus dans le réseau de chaîne de blocs, la seconde demande de vérification incluant une seconde logique parmi la pluralité de logiques et les valeurs d'entrée et de sortie obtenues par rapport à la seconde logique, la transmission de la seconde demande de vérification étant configurée pour amener le second nœud à vérifier la seconde logique conformément aux valeurs d'entrée et de sortie obtenues par rapport à la seconde logique, le second nœud étant l'un quelconque de la pluralité de nœuds autre que le premier nœud, la seconde logique étant l'une quelconque de la pluralité de logiques autre que la première logique.

6. Appareil de vérification selon la revendication 5,
dans lequel la transmission de la première demande de vérification est configurée pour crypter les valeurs d'entrée et de sortie obtenues par rapport à la première logique, la première demande de vérification incluant la première logique et les valeurs d'entrée et de sortie cryptées par rapport à la première logique.

7. Appareil de vérification selon la revendication 6,
dans lequel la transmission de la seconde demande de vérification est configurée pour crypter les valeurs d'entrée et de sortie obtenues par rapport à la seconde logique, la seconde demande de vérification incluant la seconde logique et les valeurs d'entrée et de sortie cryptées par rapport à la seconde logique.

8. Appareil de vérification selon la revendication 5, le traitement comprenant en outre les étapes consistant à :
en réponse à la transmission de la première demande de vérification, recevoir un premier résultat de vérification par rapport à la première logique en provenance du premier nœud dans le réseau de chaîne de blocs ; et
en réponse à la transmission de la seconde demande de vérification, recevoir un second résultat de vérification par rapport à la seconde logique en provenance du second nœud dans le réseau de chaîne de blocs.

9. Programme de vérification comprenant des instructions qui, lorsque le programme est exécuté par un ordinateur, amènent l'ordinateur à effectuer un traitement, le traitement incluant les étapes consistant à :
obtenir une politique de vérification par rapport à une chaîne de blocs, la politique de vérification incluant une pluralité de logiques, chaque logique étant configurée pour recevoir une valeur d'entrée respective et délivrer en sortie une valeur de sortie respective, au moins l'une quelconque de la pluralité de logiques étant configurée pour recevoir une valeur de sortie délivrée en sortie par une autre logique ;
obtenir, pour chaque logique incluse dans la politique de vérification obtenue, une valeur d'entrée et une valeur de sortie à partir de données d'enregistrement de vérification de données de transaction stockées dans la chaîne de blocs ;
transmettre une première demande de vérification à un premier nœud inclus dans le réseau de chaîne de blocs, la première demande de vérification incluant une première logique parmi la pluralité de logiques et les valeurs d'entrée et de sortie obtenues par rapport à la première logique, la transmission de la première demande de vérification étant configurée pour amener le premier nœud à vérifier la première logique conformément aux valeurs d'entrée et de sortie obtenues par rapport à la première logique ; et
transmettre une seconde demande de vérification à un second nœud inclus dans le réseau de chaîne de blocs, la seconde demande de vérification incluant une seconde logique parmi la pluralité de logiques et les valeurs d'entrée et de sortie obtenues par rapport à la seconde logique, la transmission de la seconde demande de vérification étant configurée pour amener le second nœud à vérifier la seconde logique conformément aux valeurs d'entrée et de sortie obtenues par rapport à la seconde logique, le second nœud étant l'un quelconque de la pluralité de nœuds autre que le premier nœud, la seconde logique étant l'une quelconque de la pluralité de logiques autre que la première logique.

10. Programme de vérification selon la revendication 9,
dans lequel la transmission de la première demande de vérification est configurée pour crypter les valeurs d'entrée et de sortie obtenues par rapport à la première logique, la première demande de vérification incluant la première logique et les valeurs d'entrée et de sortie cryptées par rapport à la première logique.

11. Programme de vérification selon la revendication 10,
dans lequel la transmission de la seconde demande de vérification est configurée pour crypter les valeurs d'entrée et de sortie obtenues par rapport à la seconde logique, la seconde demande de vérification incluant la seconde logique et les valeurs d'entrée et de sortie cryptées par rapport à la seconde logique.

12. Programme de vérification selon la revendication 9, le procédé comprenant en outre les étapes consistant à :
en réponse à la transmission de la première demande de vérification, recevoir un premier résultat de vérification par rapport à la première logique en provenance du premier nœud dans le réseau de chaîne de blocs ; et
en réponse à la transmission de la seconde demande de vérification, recevoir un second résultat de vérification par rapport à la seconde logique en provenance du second nœud dans le réseau de chaîne de blocs.
